# EUROPÄISCHE PATENTSCHRIFT

(11) **EP 0 761 746 B1**
(45) Veröffentlichungstag und Bekanntmachung des Hinweises auf die Patenterteilung: **02.06.2010**
(21) Anmeldenummer: 96112605.9
(22) Anmeldetag: 05.08.1996
(51) Int. Cl.: C08K 13/08, C08L 69/00, C08K 3/00, C08K 11/00

(54) **Feinsteilige anorganische Pulver als Flammschutzmittel in thermoplastischen Formmassen**
Ultrafine inorganic powders as flame retardants in thermoplastic moulding compositions
Poudres inorganiques ultrafines comme ignifuge dans des masses à mouler

(30) Priorität: 17.08.1995 DE 19530200
(43) Veröffentlichungstag der Anmeldung: 12.03.1997
(73) Patentinhaber: Bayer MaterialScience AG, 51368 Leverkusen (DE)
(72) Erfinder: Bödiger, Michael, Dr., 41539 Dormagen (DE); Eckel, Thomas, Dr., 41540 Dormagen (DE); Wittmann, Dieter, Dr., 51375 Leverkusen (DE); Alberts, Heinrich, Dr., 51519 Odenthal (DE)

(56) Entgegenhaltungen:
- EP-A1- 0 209 033
- EP-A1- 0 416 407
- WO-A2-93/09169

## Beschreibung

Die Erfindung betrifft thermoplastische Formmassen enthaltend thermoplastische Polycarbonate, feinstteilige anorganische Pulver aus TiN, TiO₂, SiO₂, SnO₂, WC. ZnO, Böhmit, ZrO₂, Aluminiumoxid, Eisenoxid oder deren Mischungen mit einem mittleren Teilchendurchmesser von 0.1 bis 100 nm und phosphorhaltige Flammschutzmittelverbindungen.

Thermoplastische Polymere und Mischungen verschiedener thermoplastischer Polymerer spielen als Hauptbestandteil von Konstruktionswerkstoffen eine bedeutende Rolle. Die meisten dieser Werkstoffe enthalten Additive, z.B. Stabilisatoren, Farbstoffe, Entformungsmittel, Flammschutzmittel, Antistatika.

EP 0 174 493 (US-PS 4 983 658) z.B. beschreibt flammgeschützte, halogenhaltige Polymermischungen aus aromatischem Polycarbonat, styrolhaltigem Pfropfcopolymerisat, Monophosphaten und einer speziellen Polytetrafluorethylen-Formulierung. In der US-PS 5 030 675 werden flammwidrige, thermoplastische Formmassen aus aromatischem Polycarbonat, ABS-Polymerisat, Polyalkylenterephthalat mit Monophosphaten und fluorierten Polyolefinen als Flammschutzmittel beschrieben. Auch Diphosphate sind als Flammschutzmittel bekannt. In J-A 59 202 240 wird die Herstellung eines solchen Diphosphats aus Phosphoroxychlorid, Diphenolen (z.B. Hydrochinon, Bisphenol A) und Monophenolen (z.B. Phenol, Kresol) beschrieben. Diese Diphosphate können in Polyamid oder Polycarbonat als Flammschutzmittel eingesetzt werden.

In der EP-A 0 363 608 (= US-PS 5 204 394) werden Mischungen aus aromatischem Polycarbonat, styrolhaltigem Copolymerisat oder Pfropfcopolymerisat mit oligomeren Phosphaten als Flammschutzmittel beschrieben und in US-PS 5 061 745 Mischungen aus aromatischem Polycarbonat, ABS-Pfropfpolymerisat und/oder styrolhaltigem Copolymerisat mit Monophosphaten als Flammschutzmittel.

Feinstteilige anorganische Substanzen werden technisch zu verschiedenen Zwecken verwendet z.B. zur Herstellung transparenter Materialien für optische Anwendungen (Linsen) vgl. FR-A 2 682 389, kratzfester Beschichtungen (J-A 03 279 210), leitfähiger Beschichtungen (J-A 05 239 409 und J-A 04 303 937) und als Füllstoff für Kunststoffe (DD 296 897, DE-A 4 124 588 und J-A 02 188 421).

EP-A0416407 offenbart thermoplastische Formmassen bestehend aus Polycarbonat, Polyalkylentherephthalat und gegebenenfalls weiteren Polymeren, die Bariumsulfat mit einer Korngröße kleiner als 100 nm enthalten und weiterhin übliche Additive, wie beispielsweise Flammschutzmittel.

EP-A-0209033 offenbart gefüllte Polycarbonatformkörper, die Ruß mit einer mittleren Teilchengröße von 30 nm enthalten und die des weiteren auch mit üblichen Additiven, wie beispielsweise Flammschutzmittel, ausgerüstet sein können. WO 93/09169 A2 offenbart allgemein flammgeschützte synthetische Harzzusammensetzungen enthaltend Sb₂O₂ mit 1000 nm sowie Sb₂O₃ mit 30 nm, 50 nm, 150 nm Teilchengröße sowie modifiziertes Magnesiumhydroxid mit einer Teilchengröße von 225 nm. Zusammensetzungen enthaltend Polycarbonat werden nicht offenbart.

Dieser Erfindung liegt die Erkenntnis zugrunde, daß ein Zusatz von feinstteiligen anorganischen Pulvern aus TiN, TiO₂, SiO₂, SnO₂, WC, ZnO, Böhmit, ZrO₂, Aluminiumoxid. Eisenoxid oder deren Mischungen mit einem mittleren Teilchendurchmesser von 0,1 bis 100 nm zusammen mit phosphorhaltige Flammschtzmittel verbindungen in thermoplastischen Polycarbonat-Formmassen eine drastische Reduktion der Nachbrennzeiten und damit eine erhebliche Verbesserung des Flammschutzes bewirkt. Gegenstand der Erfindung sind thermoplastische Formmassen enthaltend:
A. Ein thermoplastisches Polycarbonat,
B. 0,01 bis 50, vorzugsweise 0,1 bis 10 Gew.-Teile pro 100 Gew.-Teile (A) feinstteilige anorganische Pulver aus TiN, TiO₂, SiO₂, SnO₂, WC, ZnO, Böhmit, zrO₂, Aluminiumoxid. Eisenoxid oder deren Mischungen mit einem mittleren Teilchendurchmesser von 0,1 bis 100 nm, vorzugsweise 1 bis 50 nm, insbesondere 1 bis 30 nm und
C. 0,1 bis 50, vorzugsweise 0,5 bis 20 Gew.-Teile pro 100 Gew.-Teile (A) phosphorhaltige Flammschutzmittelverbindungen.

### Thermoplastische Polycarbonate A

Bevorzugte Polycarbonate sind solche auf Basis der Diphenole der Formel (I) 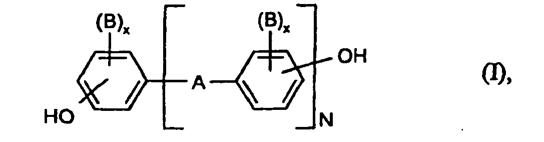 worin
- A: eine Einfachbindung, ein C₁-C₅-Alkylen, ein C₂-C₅-Alkyliden, ein C₅-C₆-Cycloalkyliden, -S- oder -SO₂-,
- B: Chlor, Brom
- X: 0, 1 oder 2 und
- n: 1 oder 0 sind.

Erfindungsgemäß geeignete Polycarbonate sind sowohl Homopolycarbonate als auch Copolycarbonate.

A kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenol mit insgesamt 8-20 C-Atomen in den Alkylsubstituenten gemäß deutscher Patentanmeldung P 3 506 472.2 (Le A 23 654), wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole (I).

Die erfindungsgemäß geeigneten Polycarbonate A haben mittlere Molekulargewichte (M̅w, Gewichtsmittel, gemessen z.B. durch Ultrazentrifugation oder Streulichtmessung) von 10 000 bis 200 000, vorzugsweise von 20 000 bis 80 000.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole sind auch alkylsubstituierte Dihydroxydiphenylcycloalkane der Formel (II), 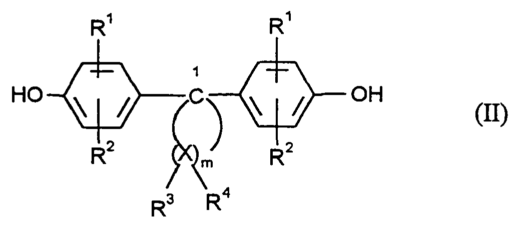 worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆-Alkyl
und
- X: Kohlenstoff bedeuten,
mit der Maßgabe, daß an mindestens einem Atom X R³ und R⁴ gleichzeitig Alkyl bedeuten.

Die erfindungsgemäß geeigneten Polycarbonate A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan. Bevorzugte Polycarbonate sind neben dem Bisphenol A-Homopolycarbonat auch Polycarbonat-Siloxan-Blockcopolymere.

Die Polycarbonate A können teilweise oder vollständig durch aromatische Polyestercarbonate ersetzt werden.

Die thermoplastischen Polycarbonate können teilweise durch Homopolymerisate oder Copolymerisate von ethylenisch ungesättigten Monomeren ersetzt werden. Auch Mischungen verschiedener Homo- oder Copolymerisate sind geeignet.

Beispiele für Homopolymerisate und Copolymerisate von einem oder mehreren ethylenisch ungesättigten Monomeren ("Vinylpolymerisate") sind solche der Monomeren Ethylen, Propylen, Vinylacetat, Styrol, α-Methylstyrol, kernsubstituierte Styrole, Acrylnitril, Methacrylnitril, Methylmethacrylat, Maleinsäureanhydrid, N-substituierte-Maleinimide, Chloropren, Butadien-1,3, Isopropen, C₁-C₁₈-Alkylacrylate und -Methacrylate.

Insbesondere kommen in Frage:
- kautschukfreie Vinylpolymerisate (A.1)
- kautschukhaltige Vinylpolymerisate, z.B. Pfropfpolymerisate von Vinylmonomeren auf einen Kautschuk (A.2)
- Mischungen aus kautschukfreien (A.1) und kautschukhaltigen (A.2) Vinylpolymerisaten.

Bevorzugte Vinylpolymerisate A.1 sind Copolymerisate aus einerseits Styrol, α-Methylstyrol, kernsubstituiertem Styrol oder Mischungen (A.1.1) und andererseits Acrylnitril, Methacrylnitril, Methylmethacrylat, Maleinsäureanhydrid, N-substituiertes Maleinimid oder Mischungen (A.1.2).

Bevorzugt enthalten diese Copolymerisate 50 bis 98 Gew.-% A.1.1 und 50 bis 2 Gew.-% A.1.2.

Besonders bevorzugte Copolymerisate A.1 sind solche aus Styrol, Acrylnitril und gegebenenfalls Methylmethacrylat, aus α-Methylstyrol, Acrylnitril und gegebenenfalls Methylmethacrylat sowie aus Styrol, α-Methylstyrol, Acrylnitril und gegebenenfalls Methylmethacrylat.

Die bekanntesten sind Styrol-Acrylnitril-Copolymerisate, die durch radikalische Polymerisation, insbesondere durch Emulsions-, Suspensions-, Lösungs- oder Massepolymerisation hergestellt werden können. Die Copolymerisate A.1 besitzen vorzugsweise Molekulargewichte M̅_{w} (Gewichtsmittel, ermittelt durch Lichtstreuung oder Sedimentation) von 15.000 bis 200.000.

Weitere besonders bevorzugte Copolymerisate A.1 sind statistisch aufgebaute Copolymerisate aus Styrol und Maleinsäureanhydrid, die z.B. durch eine kontinuierliche Masse- oder Lösungspolymerisation bei unvollständigen Umsätzen aus dem entsprechenden Monomeren hergestellt werden können. Ihre Zusammensetzung kann innerhalb weiter Grenzen variiert werden. Bevorzugt enthalten sie 5 bis 25 Gew.-% Maleinsäureanhydrideinheiten.

Anstelle von Styrol können diese Polymerisate auch kernsubstituierte Styrole, wie p-Methylstyrol, Vinyltoluol, 2,4-Dimethylstyrol und andere substituierte Styrole, wie α-Methylstyrol, enthalten.

Die kautschukhaltigen Vinylpolymerisate A.2 umfassen z.B. Pfropfcopolymerisate mit kautschukelastischen Eigenschaften, die im wesentlichen aus mindestens zwei der folgenden Monomeren erhältlich sind: Chloropren, Butadien-1,3, Isopropen, Styrol, Acrylnitril, Ethylen, Propylen, Vinylacetat, C₁-C₁₈-Alkylacrylate und -methacrylate. Solche Polymerisate sind z.B. in "Methoden der Organischen Chemie" (Houben-Weyl), Bd. 14/1, Georg Thieme-Verlag, Stuttgart, 1961, S. 393-406 und in C.B. Bucknall, "Toughened Plastics", Appl. Science Publishers, London 1977, beschrieben. Bevorzugte Polymerisate A.2 sind partiell vernetzt und besitzen Gelgehalte von über 20 Gew.-%, vorzugsweise über 40 Gew.-%, insbesondere über 60 Gew.-%.

Bevorzugte kautschukartige Vinylpolymerisate A.2 sind Pfropfpolymerisate aus:
A.2.1 5 bis 95, vorzugsweise 30 bis 80, Gew.-Teilen, einer Mischung aus
A.2.1.1 50 bis 95 Gew.-Teilen Styrol, α-Methylstyrol, halogen- oder methylkernsubstituierten Styrolen, Methylmethacrylat oder Mischungen dieser Verbindungen und
A.2.1.2 5 bis 50 Gew.-Teilen Acrylnitril, Methacrylnitril, Methylmethacrylat, Maleinsäuranhydrid, C₁-C₄-alkyl- bzw. phenyl-N-substituierten Maleinimiden oder Mischungen dieser Verbindungen auf
A.2.2 5 bis 95, vorzugsweise 20 bis 70, Gew.-Teile Kautschuk-Polymerisat mit einer Glasübergangstemperatur unter -10°C.

Bevorzugte Pfropfpolymerisate A.2 sind z.B. mit Styrol und/oder Acrylnitril und/oder Alkylacrylaten oder -Methacrylaten gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate A.2 sind ABS-Polymerisate, wie sie z.B. in der DE-OS 2 035 390 (= US-PS 3 644 574) und in der DE-OS 2 248 242 (= GB-PS 1 409 275) beschrieben sind.

Besonders bevorzugte Pfropfpolymerisate A.2 sind erhältlich durch Pfropfpolymerisation von
α. 10 bis 70, vorzugsweise 15 bis 50, insbesondere 20 bis 40 Gew.-%, bezogen auf Pfropfpolymerisat A.2, von Acrylsäureestern oder Methacrylsäureestern oder von 10 bis 70, vorzugsweise 15 bis 50, insbesondere 20 bis 40 Gew.-% eines Gemisches aus 10 bis 50, vorzugsweise 20 bis 35 Gew.-%; bezogen auf Gemisch, Acrylnitril, Acrylsäureester oder Methacrylsäureester und 50 bis 90, vorzugsweise 65 bis 80 Gew.-%, bezogen auf Gemisch, Styrol (als Pfropfauflage A.2.1) auf
β. 30 bis 90, vorzugsweise 50 bis 85, insbesondere 60 bis 80 Gew.-%, bezogen auf Pfropfpolymerisat A.2, eines Butadien-Polymerisats mit mindestens 50 Gew.-%, bezogen auf β, Butadienresten (als Pfropfgrundlage A.2.2),
wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser d₅₀ des Pfropfpolymerisats A.2 0,05 bis 2 µm, vorzugsweise 0,1 bis 0,6 µm beträgt.

Acrylsäureester bzw. Methacrylsäureester α sind Ester der Acrylsäure oder Methacrylsäure und einwertiger Alkohole mit 1 bis 18 C-Atomen. Besonders bevorzugt sind Methylmethacrylat, Ethylmethacrylat, Propylmethacrylat, n-Butylacrylat, t-Butylacrylat und t-Butylmethacrylat.

Das Butadienpolymerisat β kann neben Butadienresten bis zu 50 Gew.-%, bezogen auf β, Reste anderer ethylenisch ungesättigter Monomerer, wie Styrol, Acrylnitril, C₁-C₄-Alkylester oder Acryl- oder Methyacrylsäure (wie Methylacrylat, Ethylacrylat, Methylmethacrylat, Ethylmethacrylat), Vinylester und/oder Vinylether) enthalten. Bevorzugt ist Polybutadien.

Bei der Pfropfpolymerisation werden die Pfropfmonomeren bekanntlich nicht vollständig auf die Pfropfgrundlage polymerisiert; erfindungsgemäß schließen Pfropfpolymerisate A.2 aber Produkte ein, die durch Polymerisation der Pfropfmonomere in Gegenwart der Pfropfgrundlage gewonnen werden.

Der Pfropfgrad G ist das Gewichtsverhältnis von aufgepfropften Pfropfmomomeren zur Pfropfgrundlage (Dimensionslose Zahl).

Der mittlere Teilchendurchmesser d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Weitere besonders bevorzugte Polymerisate A.2 sind Pfropfpolymerisate aus
τ. 20 bis 90 Gew.-%, bezogen auf A.2, Acrylatkautschuk mit einer Glasübergangstemperatur unter -20°C als Pfropfgrundlage A.2.2 und
δ. 10 bis 80 Gew.-%, bezogen auf A.2, mindestens eines polymerisierbaren, ethylenisch ungesättigten Monomeren, dessen bzw. deren in Abwesenheit von 1. entstandenen Homo- bzw. Copolymerisate eine Glasübergangstemperatur über 25°C hätten, als Pfropfmonomere A.2.1.

Die Acrylatkautschuke τ der Polymerisate A.2 sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethyl-hexylester; Halogenalkylester, vorzugsweise Halogen-C₁-C₈-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z.B. Acrylnitril, Styrol, α-Methylstyrol, Acrylamide, Vinyl-C₁-C₆-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-OS 37 04 657, DE-OS 37 04 655, DE-OS 36 31 540 und DE-OS 36 31 539 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik I und II, Georg-Thieme-Verlag, Stuttgart 1977).

Die Pfropfpolymerisate A. 2 können nach bekannten Verfahren wie Masse-, Suspensions-, Emulsions- oder Masse-Suspensionsverfahren hergestellt werden.

Die Polycarbonate A können auch teilweise durch Polyester ersetzt werden.

Bevorzugte Polyester sind Polyalkylenterephthalate. Diese sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch), Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol und/oder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandimethanol-1,4, 3-Methylpentandiol-1,3 und -1,6, 2-Ethylhexandiol-1,3, 2,2-Diethylpropandiol-1,3, Hexandiol-2,5, 1-4-Di(β-hydroxyethoxyphenyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentraerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyalkylenterephthalate besitzen im allgemeinen eine Intrinsic-Viskosität von 0,4 bis 1,4 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25°C.

Feinstteilige anorganische Pulver gemäß Komponente B bestehen aus TiN, TiO₂, SiO₂, SnO₂, WC, ZnO, Böhmit, ZrO₂ Al₂O₃, Eisenoxide. Mischungen und dotierte Verbindungen sind ebenfalls verwendbar.

Besonders bevorzugt sind Aluminiumoxide, z.B. Böhmit, TiO₂ und TiN.

Die Pulver können nach üblichen Verfahren in die thermoplastischen Kunststoffe A eingearbeitet werden, beispielsweise durch direktes Kneten oder Extrudieren von Kunststoff A und den feinstteiligen anorganischen Pulvern. Bevorzugte Verfahren stellen die Herstellung eines Masterbatch, z.B. in Flammschutzadditiven und anderen Additiven, Monomeren oder Lösungsmitteln, oder die Cofällung von Thermoplasten A und den feinstteiligen anorganischen Pulvern, z.B. durch Cofällung einer wäßrigen Emulsion und den feinstteiligen anorganischen Pulvern dar.

Die durchschnittlichen Teilchendurchmesser sind 0,1 bis 100 nm, bevorzugt 1 bis 50 nm, insbesondere 1 bis 30 nm.

Teilchengröße und Teilchendurchmesser bedeutet immer den mittleren Teilchendurchmesser d₅₀ ermittelt durch Ultrazentrifugenmessungen nach W. Scholtan et al., Kolloid-Z. und Z. Polymere 250 (1972), S. 782 bis 796.

### Additice C

Additive C im Sinne der Erfindung sind phosphorhaltige Flammschutzmittel verbindungen, insbesondere Phosphinoxide und Derivate von Säuren des Phosphors und Salze von Säuren und Säurederivaten des Phosphors.

Bevorzugt werden Derivate (z.B. Ester) von Säuren des Phosphors und deren Salze, wobei Säuren des Phosphors, Phosphorsäure, Phosphonsäure, Phosphinsäure, phosphorige Säure, auch jeweils in dehydratisierter Form einschließt, Salze bevorzugt Alkali-, Erdalkali- und Ammoniumsalze dieser Säuren sind und auch deren Derivate (beispielsweise teilveresterter Säuren) eingeschlossen sind.

Besonders bevorzugte Phosphorverbindungen sind solche der Formel (VIII) 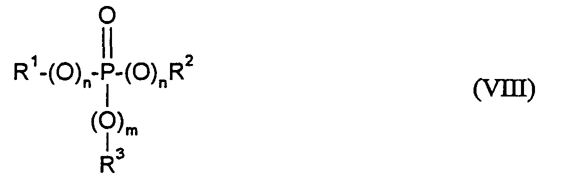 in denen R¹, R² und R³ unabhängig voneinander ein gegebenenfalls halogeniertes C₁-C₈-Alkyl oder ein gegebenenfalls halogeniertes und/oder alkyliertes C₅- oder C₆-Cycloalkyl oder ein gegebenenfalls halogeniertes und/oder alkyliertes und/oder aralkyliertes C₆-C₃₀-Aryl, und "n" und "m" unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979). Die aralkylierten Phosphorverbindungen sind beispielsweise in der DE-OS 38 24 356.0 beschrieben.

Gegebenenfalls halogenierte C₁-C₈-Alkylreste gemäß (VIII) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte C₅-oder C₆-Cycloalkyle gemäß (VIII) sind gegebenenfalls einfach bis mehrfach halogenierte und/oder alkylierte C₅- oder C₆-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte C₆-C₃₀-Arylreste gemäß (VIII) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Erfindungsgemäß einsetzbare Phosphorverbindungen gemäß Formel (VIII) sind z.B. Tributylphosphat, Tris-(2-chlorethyl)phosphat, Tris-(2,3-dibrompropyl) phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipenthylester und Phenylphosphonsäurediethylester.

Geeignete Flammschutzmittel sind auch dimere und oligomere Phosphate, deren Molekulargewicht kleiner 2000 g/Mol, vorzugsweise kleiner 1000 g/Mol ist. Diese sind beispielsweise in der EP-A 0 363 608 beschrieben.

Die erfindungsgemäßen Formmassen können zusätzliche Additive, Glasfaser oder Polymere, die nicht thermoplastisch verarbeitbar sind wie beispielsweise Polytetrafluorethylen, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die Bestandteile können nacheinander oder gleichzeitig gemischt werden. In speziellen Fällen kann es günstig sein, aus den niedermolekularen Additiven und den Magnesium-Aluminium Silikaten Vormischungen herzustellen.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden. Beispiele für Formkörper sind:
Gehäuseteile (z.B. für Haushaltsgeräte wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

### Beispiele

### Thermoplastische Polycarbonate

A1 Lineares Bisphenol-A-Polycarbonat mit einer relativen Lösungsviskosität von 1,286 (gemessen in CH₂Cl₂ bei 25°C und in einer Konzentration von 0,5 g/100 ml.
A2 Styrol/Acrylnitril-Copolymeriat (Styrol/Acrylnitril-Gew.-Verhältnis 72:28) mit einer Grenzviskosität von 0,55 dl/g (Messung in Dimethylformamid bei 20°C).
A3 Pfropfpolymerisat von 45 Gew.-Teilen Styrol und Acrylnitril im Verhältnis 72:28 auf 55 Gew.-Teile teilchenförmigen vernetzten Polybutadienkautschuk (mittlerer Teilchendurchmesser d₅₀ = 0,4 µm), hergestellt durch Emulsionspolymerisation.
A4 Pfropfpolymerisat A3 + Polytetrafluorethylen

Das Tetrafluorethylenpolymerisat wird als koagulierte Mischung aus einer SAN-Pfropfpolymerisat-Emulsion gemäß A3 in Wasser und einer Tetrafluorethylenpolymerisat-Emulsion in Wasser eingesetzt. Das Gewichtsverhältnis Pfropfpolymerisat A3 zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%, die Teilchengröße liegt zwischen 0,05 und 0,5 µm. Die SAN-Pfropfpolymerisat-Emulsion besitzt einen Feststoffgehalt von 34 Gew.-% und eine mittlere Latexteilchengröße von 0,4 µm.

### Additive B

Feinstteilige anorganische Pulver **B**

### B1. 160 g TiN werden in 500 ml Wasser unter starkem Rühren dispergiert (Dispersion D1). Die Teilchengröße des TiN beträgt 70 nm.

1840 g wäßrige Dispersion des Pfropfpolymerisats A3 (36,2 % Feststoff) werden vorgelegt und die TiN/Wasser-Dispersion (Dispersion 1) unter starkem Rühren in 60 min zudosiert. Dabei wird der pH-Wert der wäßrigen Dispersion des Pfropfpolymerisats A3 oberhalb von 9 gehalten. Die entstandene Dispersion wird 6 h intensiv gerührt. Anschließend wird der Latex gefällt. Dazu wird eine Fällflotte bestehend aus 10 l Wasser, 100 ml konzentrierter Essigsäure und 200 g Bittersalz (MgSO₄ · 7H₂O) vorgelegt. Die Flotte wird auf 30°C aufgeheizt. Unter Rühren wird die Dispersion zugegeben, auf 100°C aufgeheizt und 10 min bei dieser Temperatur belassen. Die Fällung wird durch Wasserzugabe abgekühlt und auf einem Planfilter sulfatfrei gewaschen. Das entstandene Pulver wird bei 70°C getrocknet. Die Mischung enthält 8 Gew.-% TiN. Die Teilchengröße des TiN beträgt 70 nm.

### B2. Herstellung analog B1. TiN wird ersetzt durch TiO₂. Die fertige Mischung enthält 7,5 Gew.-% TiO₂. Die Teilchengröße des eingesetzten TiO₂ beträgt 5 nm.

### B2.1 Herstellung analog B1. Das statt TiN benutzte TiO₂ hat einen mittleren Teilchendurchmesser von 250 nm. Seine Menge in der Mischung beträgt 7,5 Gew.-%.

### B3. Herstellung analog B1. TiN wird durch Böhmit (Al₂O₃ · H₂O) ersetzt. Die fertige Mischung enthält 8,0 Gew.-% Böhmit. Die Teilchengröße des Böhmit beträgt 12 nm.

### C. Flammschutzmittel

m-Phenylen-bis-diphenylphosphat

### Herstellung und Prüfung der erfindungsgemäßen Formmassen

Die flammwidrigen thermoplastischen Formmassen werden hergestellt durch Kneten der Bestandteile A, B und C in einem Kleinkneter vom Typ W 50 E der Firma BRABENDER OHG, Duisburg bei 210 bis 230°C, einer Drehzahl von 60 min⁻¹ und einer Knetdauer von 10 min. Die hergestellten Formmassen wurden auf einer elektrisch beheizbaren Laborpresse vom Typ POLYSTAT 200 T der Firma SCHWABENTHAN zu Platten von 1,6 mm Dicke verpreßt. Die Preßtemperatur betrug 200°C, der Preßdruck 200 bar und die Preßdauer 5 min.

Das Brandverhalten der Proben wurde nach UL-Subj. 94 V an Stäben der Abmessung 127 mm x 12,7 mm x 1,6 mm gemessen.

Die Stäbe wurden vertikal so montiert, daß die Unterseite des Probekörpers sich 305 mm über einem Streifen Verbandstoff befand. Jeder Probestab wurde einzeln mittels zweier aufeinanderfolgenden Zündvorgängen von 10 s Dauer entzündet. Die Brenneigenschaften nach jedem Zündvorgang wurden beobachtet und danach die Probe bewertet. Zum Entzünden der Probe wurde ein Bunsenbrenner mit einer 10 mm (3,8 inch) hohen blauen Flamme von Erdgas mit einer Wärmeeinheit von 3,73 x 10⁴ kJ/m³ (1000 BUT per cubic foot) benutzt.

Zur Beurteilung des Brandverhaltens wurde jeder Probenkörper zweimal für die Dauer von jeweils 10 s beflammt. Nach dem Entfernen der Zündquelle wurde die Nachbrennzeit gemessen. Für jeden Versuch wurden fünf Probenkörper verwendet und die 5 gemessenen Brennzeiten gemittelt.

**Tabelle 1 Zusammensetzung und Eigenschaften der Formmassen**

| Bsp. | A1 (Gew.-%) | A2 (Gew.-%) | A3 (Gew: %) | A4 (Gew.-%) | B1 (Gew.-%) | B2 (Gew.-%) | B2.1 (Gew.-%) | B3 (Gew.-%) | **C** (Gew.-%) | Brand zeit (s)¹⁾ |
|---|---|---|---|---|---|---|---|---|---|---|
| 1²⁾ | 70 | 3 | 8 | 4 | - | - | - | - | 15 | 4,0 |
| 2 | 70 | 5 | 6 | - | 4 | - | - | - | 15 | 2,4 |
| 3 | 70 | 5 | | - | 10 | - | - | - | 15 | 1,9 |
| 4 | 70 | 5 | 6 | - | - | 4 | - | - | 15 | 1,1 |
| 5 | 70 | 5 | | - | - | 10 | - | - | 15 | 0,5 |
| 6 | 70 | 5 | 6 | - | - | - | - | 4 | 15 | 0,6 |
| 7 | 70 | 5 | | - | - | - | - | 10 | 15 | 0,4 |
| 8²⁾ | 70 | 5 | 6 | - | - | - | 4 | - | 15 | 6,1 |
| 9²⁾ | 70 | 5 | - | - | - | - | 10 | - | 15 | 4,4 |

| | | | | | | | | | | |
|---|---|---|---|---|---|---|---|---|---|---|
| 1) Brandverhalten: durchschnittliche Nachbrennzeit in Sekunden 2) Vergleichsversuche | | | | | | | | | | |

Aus den erfindungsgemäßen Beispielen 2 bis 7 geht klar hervor, daß eine Kombination aus feinstteiligem anorganischen Pulver und einem Phosphat als Flammschutzmittel zu einer deutlichen Reduktion der Nachbrennzeiten der Polycarbonat/ABS-Formmassen führen. In diesem Sinne sind verschiedene Metallverbindungen wie TiN, TiO₂ oder Al₂O₃ · H₂O (Böhmit) geeignet.

Ein großteiliges anorganisches Pulver (Vergleichsversuch 8) zeigt diesen Effekt nicht.

## Patentansprüche

1. Thermoplastische Formmassen enthaltend:
A. thermoplastisches Polycarbonat
B. 0,01 bis 50 Gew.-Teile pro 100 Gew:-Teile (A) feinstteilige anorganische Pulver aus TiN, TiO_{2,} SiO₂, SnO₂, WC, Böhmit, ZrO₂, Aluminiumoxide, Eisenoxide oder deren Mischungen mit einem mittleren Teilchendurchmesser von 0,1 bis 100 nm
und
C. 0,1 bis 50 Gew.-Teile pro 100 Gew.-Teile (A) phosphorhaltige Flammschutzmittelverbindungen.

2. Formmassen gemäß Anspruch 1, wobei das Polycarbonat teilweise durch thermoplastische Polyester ersetzt ist.

3. Formmassen gemäß Anspruch 1, wobei das Polycarbonat A teilweise durch thermoplastische Homo- oder Copolymerisate ersetzt ist.

4. Formmassen gemäß Anspruch 1, enthaltend thermoplastische Homo- oder Copolymerisate aus
50 bis 98 Gew.-% Styrol, α-Methylstyrol, kernsubstituiertem Styrol, Methylmethacrylat oder Mischungen daraus und
50 bis 2 Gew.-% Acrylnitril, Methacrylnitril, Methylmethacrylat, Maleinsänreanhydrid, N-substituiertem Maleinimid und Mischungen daraus.

5. Formmassen gemäß Anspruch 1, enthaltend Pfropfpolymerisate harzbildender Vmylmonomerer auf einen Kautschuk.

6. Formmassen gemäß Anspruch 5, worin die Pfropfpolymerisate erhalten werden durch Pfropfpolymerisation von
5 bis 95 Gew.-Teilen, einer Mischung aus
50 bis 95 Gew.-Teilen Styrol, α-Methylstyrol, halogen- oder alkylkernsubstituierten Styrolen, C₁-C₈-Alkylmethacrylaten, C₁-C₈-Alkylacrylaten oder Mischungen dieser Verbindungen und
5 bis 50 Gew.-Teilen Acrylnitril, Methacrylnitril, C₁-C₈-Alkylmethacrylaten, C₁-C-Alkylacrylaten, Maleinsäureanhydrid, C₁-C₄-alkyl- bzw. phenyl-N-substituierten Maleinimiden oder Mischungen dieser Verbindungen auf
5 bis 95 Gew.-Teile Kautschuk mit einer Glasübergangstemperatur unter -10°C.

7. Formmassen gemäß Anspruch 5, worin der Kautschuk ein Dienkautschuk, Acrylatkautschuk, Silikonkautschuk oder Ethylen-Propylen-Dien-Kautschuk ist.

8. Formmassen gemäß Anspruch 1, enthaltend Mischungen aus thermoplastischen Polycarbonaten und Pfropfpolymerisate harzbildender Vinylmonomerer auf einen Kautschuk.

9. Formmassen gemäß Anspruch 1, enthaltend als B TiN.

10. Formmassen gemäß Anspruch 1, enthaltend als B TiO₂, oder Al₂O_{3.}

11. Formmassen gemäß Anspruch 1, enthaltend als C Phosphorverbindungen der Formel (VIII) 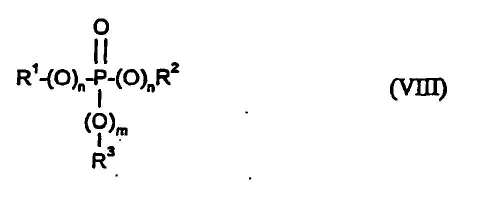 in dem R¹, R² und R³ unabhängig voneinander einer C₁-C₈-Alkyl oder gegebenenfalls halogeniertes C₅- oder C₆-Cycloalkyl oder einer gegebenenfalls alkylierten oder aralkylierten C₆-C₃₀-Aryl, und "n" und "m" unabhängig voneinander 0 oder 1 sind.

12. Formmassen gemäß Anspruch 1, enthaltend als C dimere und oligomere Phosphate mit einem Molekulargewicht kleiner als 2 000 g/mol.

## Claims

1. Thermoplastic moulding compositions containing:
A. thermoplastic polycarbonate
B. 0.01 to 50 parts by weight per 100 parts by weight of (A) of extremely finely divided inorganic powders of TiN, TiO₂, SiO₂ SnO₂, WC, ZnO, boehmite, ZrO₂, aluminium oxides, iron oxides or mixtures thereof having an average particle diameter of 0.1 to 100 nm
and
C. 0.1 to 50 parts by weight per 100 parts by weight of (A) of phosphorus-containing flame retardant compounds.

2. The moulding compositions according to claim 1, wherein the polycarbonate is partly replaced by thermoplastic polyesters.

3. The moulding compositions according to claim 1, wherein the polycarbonate A is partly replaced by thermoplastic homo- or copolymers.

4. The moulding compositions according to claim 1, containing thermoplastic homo- or copolymers of
50 to 98 wt.% styrene, α-methyl styrene, ring-substituted styrene, methyl methacrylate or mixtures thereof and
50 to 2 wt.% acrylonitrile, methacrylonitrile, methyl methacrylate, maleic anhydride, N-substituted maleimide and mixtures thereof.

5. The moulding compositions according to claim 1, containing graft polymers of resin-forming vinyl monomers on a rubber.

6. The moulding compositions according to claim 5, wherein the graft polymers are obtained by graft polymerisation of
5 to 95 parts by weight of a mixture of
50 to 95 parts by weight of styrene, α-methyl styrene, halogen or alkyl ring-substituted styrenes, C₁-C₈ alkyl methacrylates, C₁-C₈ alkyl acrylates or mixtures of these compounds and
5 to 50 parts by weight of acrylonitrile, methacrylonitrile, C₁-C₈ alkyl methacrylates, C₁-C alkyl acrylates, maleic anhydride, C₁-C₄ alkyl or phenyl N-substituted maleimides or mixtures of these compounds on
5 to 95 parts by weight of rubber having a glass transition temperature of below -10°C.

7. The moulding compositions according to claim 5, wherein the rubber is a diene rubber, acrylate rubber, silicone rubber or ethylene-propylene-diene rubber.

8. The moulding compositions according to claim 1, containing mixtures of thermoplastic polycarbonates and graft polymers of resin-forming vinyl monomers on a rubber.

9. The moulding compositions according to claim 1, containing TiN as B.

10. The moulding compositions according to claim 1, containing TiO₂ or Al₂O₃ as B.

11. The moulding compositions according to claim 1, containing as C phosphorus compounds of the formula (VIII) 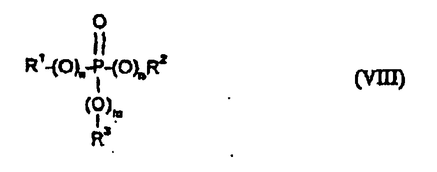 in which R1, R2 and R3, independently of one another, are a C₁-C₈ alkyl or optionally halogenated C₅ or C₆ cycloalkyl or an optionally alkylated or aralkylated C₆-C₃₀ aryl, and "n" and "m", independently of one another, are 0 or 1.

12. The moulding compositions according to claim 1, containing as C dimeric and oligomeric phosphates having a molecular weight of less than 2000 g/mol.

## Revendications

1. Masses à mouler thermoplastiques contenant :
A. un polycarbonate thermoplastique
B. 0,01 à 50 parties en poids pour 100 parties en poids de (A) de poudres inorganiques très finalement divisées de TiN, TiO₂, SiO₂, SnO₂, WC, ZnO, boehmite, ZrO₂, oxydes d'aluminium, oxydes de fer ou leurs mélanges ayant un diamètre de particules moyen de 0,1 à 100 nm,
et
C. 0,1 à 50 parties en poids pour 100 parties en poids de (A) de composés ignifugeants contenant du phosphore.

2. Masses à mouler selon la revendication 1 où le polycarbonate est remplacé en partie par des polyesters thermoplastiques.

3. Masses à mouler selon la revendication 1 où le polycarbonate A est remplacé en partie par des homo- ou copolymères thermoplastiques.

4. Masses à mouler selon la revendication 1 contenant des homo- ou copolymères thermoplastiques de
50 à 98 % en poids de styrène, d'α-méthylstyrène, de styrène substitué sur le noyau, de méthacrylate de méthyle ou de leurs mélanges et
50 à 2 % en poids d'acrylonitrile de méthacrylonitrile, de méthacrylate de méthyle, d'anhydride maléique, de maléimide N-substitué et de leurs mélanges.

5. Masses à mouler selon la revendication 1 contenant des polymères greffés de monomères vinyliques formateurs de résines sur un caoutchouc.

6. Masses à mouler selon la revendication 5 où les polymères greffés sont obtenus par polymérisation par greffage de
5 à 95 parties en poids d'un mélange de
50 à 95 parties en poids de styrène, d'α-méthylstyrène, de styrènes substitués sur le noyau par halogène ou alkyle, de méthacrylates de C₁-C₈-alkyle, d'acrylates de C₁-C₈-alkyle ou de mélanges de ces composés et
5 à 50 parties en poids d'acrylonitrile, de méthacrylonitrile, de méthacrylates de C₁-C₈-alkyle, d'acrylates de C₁-C-alkyle, d'anhydride maléique, de maléimides C₁-C₄-alkyl- ou phényl-N-substitués ou de mélanges de ces composés sur
5 à 95 parties en poids de caoutchouc ayant une température de transition vitreuse inférieure à -10°C.

7. Masses à mouler selon la revendication 5 où le caoutchouc est un caoutchouc diénique, un caoutchouc d'acrylate, un caoutchouc de silicone ou un caoutchouc éthylène-propylène-diène.

8. Masses à mouler selon la revendication 1 contenant des mélanges de polycarbonates thermoplastiques et de polymères greffés de monomères vinyliques formateurs de résines sur un caoutchouc.

9. Masses à mouler selon la revendication 1 contenant TiN comme B.

10. Masses à mouler selon la revendication 1 contenant TiO₂ ou Al₂O₃ comme B.

11. Masses à mouler selon la revendication 1 contenant comme C des composés du phosphore de formule (VIII) 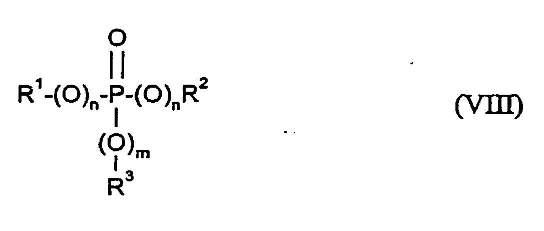 où R¹, R² et R³ représentent indépendamment les uns des autres un C₁-C₈-alkyle ou un C₅ ou C₆-cycloalkyle éventuellement halogéné ou un C₆-C₃₀-aryle éventuellement alkylé ou aralkylé, et "n" et "m" sont indépendamment l'un de l'autre 0 ou 1.

12. Masses à mouler selon la revendication 1, contenant comme C des phosphates dimères et oligomères ayant une masse moléculaire inférieure à 2 000 g/mol.
